Europäisches Patentamt

European Patent Office

Office européen des brevets

(11) Veröffentlichungsnummer: **0 144 859**
A2

## (12) EUROPÄISCHE PATENTANMELDUNG

(21) Anmeldenummer: 84114060.1

(22) Anmeldetag: 22.11.84

(51) Int. Cl.⁴: **B 23 B 27/16**

(30) Priorität: 28.11.83 DE 3342981

(43) Veröffentlichungstag der Anmeldung:
19.06.85 Patentblatt 85/25

(84) Benannte Vertragsstaaten:
AT BE CH DE FR GB IT LI LU NL SE

(71) Anmelder: Feldmühle Aktiengesellschaft
Fritz-Vomfelde-Platz 4
D-4000 Düsseldorf 11(DE)

(72) Erfinder: Kraft, Harald, Dipl.-Ing.
Aspachstrasse 9
D-7336 Uhingen(DE)

(74) Vertreter: Uhlmann, Hans, Dr. rer.nat., Dipl.-Chem.
Gladbacher Strasse 189
D-4060 Viersen 1(DE)

(54) Klemmhalter für keramische Schneidplatten.

(57) Ein Klemmhalter 3 weist eine in eine Ausnehmung 2 eingebrachte keramische Schneidplatte 1 auf, an der eine Spannpratze 7 angreift. Die Spannpratze 7 greift in eine Spannmulde 8 in der Schneidplatte 1 ein. Der in der Spannmulde 8 eingreifende Ansatz 9 der Spann pratze 7 weist die Form eines Halbzylinders oder einer Halbtonne auf. Die Spannmulde 8 ist ballig ausgeführt. Die Schneidplatte 1 liegt nur im oberen Bereich ihrer Seitenbegrenzung an den Seitenwänden 4, 5 der Ausnehmung 2 an.

EP 0 144 859 A2

*Fig. 1*

## Klemmhalter für keramische Schneidplatten.

Die Erfindung betrifft einen Klemmhalter mit einer Ausnehmung für die Schneidplatte, bei dem eine in ihrer Rotationsmöglichkeit fixierte Spannpratze über eine Nase in eine in der Schneidplatte befindliche Spannmulde eingreift und die Schneidplatte beim Klemmvorgang in die Ausnehmung zieht, so daß sie an den Seitenwänden anliegt und justiert ist.

Ein derartiges Schneidwerkzeug ist Gegenstand der DE-OS 31 36 549. Gemäß dieser Anmeldung weist der Ansatz der Spannpratze die Form eines Halbzylinders auf. Noch vorteilhafter ist es, wenn der Ansatz der Spannpratze halbtonnenförmig ausgeführt ist. Voraussetzung, um eine punktförmige Berührung des Ansatzes in der Spannmulde zu gewährleisten, ist in beiden Fällen, daß die Spannmulde des Schneideinsatzes im wesentlichen ballig ausgeführt ist. Durch diese spezielle Ausgestaltung der Spannmulde im Schneideinsatz ist es möglich, oxidkeramische Werkstoffe, wie beispielsweise Aluminiumoxid oder Zirkonoxid als Werkstoff für den Schneideinsatz einzusetzen und trotzdem eine Ausnehmung in den Schneideinsatz einzubringen, die nicht zu einer Schwächung und damit zum Bruch des Schneideinsatzes führt.

- 2 -

0144859

Oxidkeramische Materialien werden seit langer Zeit zu Schneideinsätzen verpreßt und im Anschluß daran gesintert. Es war bisher jedoch nicht möglich, sie mit Ausnehmungen zu versehen, die ein zentrierendes Spannen ermöglichen, wenn diese Einsätze hohen Belastungen ausgesetzt werden sollen. Dadurch, daß die Spannmulde ballig ausgeführt ist, also keinerlei scharfe Kanten vorhanden sind, fließt während des Preßvorganges das Pulver, aus dem die Oxidkeramik besteht, leichter. Es ist somit gleichmäßiger verpreßbar, d.h. bei der Herstellung tritt ein gleichmäßiger Preßdruck auf, der zu einer Vergleichmäßigung der Festigkeit über den gesamten Querschnitt des Schneideinsatzes führt. Daraus resultiert, daß der Schneideinsatz bruchunanfälliger wird, gleichzeitig wird durch die ballige Form gewährleistet, daß ein zentrierendes Spannen erfolgen kann.

Der Ansatz einer Spannpratze steht mit einer durch die Linien der Spannmulde begrenzten Fläche in punktförmiger Berührung. Diese Linien sind im Falle eines halbtonnenförmigen Ansatzes der Spannpratze als gerade oder konvexe Linien, im Falle der halbzylinderförmigen Ausführung des Ansatzes als konkave Linien ausgeführt.

Die Spannpratze greift dadurch weder flächig, wie z.B. gemäß der DE-OS 26 2o 2o1, noch linienförmig, wie in der US-PS 33 41 923 dargestellt, am Schneideinsatz an. Stattdessen wird ein punktförmiger Druck ausgeübt. Oxidkeramische Materialien halten bekanntlich immense Druckspannungen aus, so daß auch durch einen punktförmigen Bereich große Kräfte übertragen werden können, ohne daß sich das negativ auf den Schneideinsatz auswirkt. Demgegenüber sind sie für Biegespannungen und auch für Zugspannungen wesentlich anfälliger, was konstruktiv
berücksichtigt werden muß.

Der punktförmige Druck ergibt sich einerseits
aus der Gestaltung der Spannpratze, andererseits
aus der Gestaltung der Spannmulde. Nach dem Einlegen des Schneideinsatzes in die Ausnehmung des
Klemmhalters greift beim Anziehen des Klemmhalters
der Ansatz in die Spannmulde ein, wobei er mit
ihr in punktförmiger Berührung steht. Durch weiteres Anziehen der Spannpratze wird ein Druck ausgeübt. Der Berührungspunkt verlagert sich in der
Spannmulde des Schneideinsatzes weiter nach unten.
Gleichzeitig gleiten die Führungsnocken der Spannpratze auf der Schräge des Klemmhalters nach unten.
Dabei tritt eine seitlich wirkende Kraft auf, die
den Schneideinsatz in Richtung der Begrenzung der
Ausnehmung verschiebt, so daß die Schneidplatte
ausgerichtet wird. Durch weiteres Anziehen der
Schraube der Spannpratze wird der Schneideinsatz
in seiner ausgerichteten Stellung festgelegt.

Drehversuche mit diesem Werkzeug (DE-OS 31 36 549)
bestätigten die saubere Zentrierung des Schneideinsatzes, führten jedoch in einigen Fällen beim Anfahren zu zunächst unerklärlichen Schneidplattenbrüchen. Die Untersuchung dieser Brüche ergab, daß
es sich um Grenzfälle handelte, bei denen die Toleranzen der Ausnehmung des Klemmhalters auf der
einen Seite und des Schneideinsatzes auf der anderen
Seite dazu führten, daß der Schneideinsatz nicht
auf dem Boden der Ausnehmung des Klemmhalters anlag,
sondern durch den Druck der Spannpratze auf die Seitenflächen der Ausnehmung gepreßt wurde, so daß ein

0144859

schmaler Spalt zwischen Boden der Ausnehmung und Schneideinsatz im Bereich der Schneidspitze auftrat. Der Schneideinsatz "schnäbelte" so zu sagen, was bei dem keramischen Schneidplattenmaterial sofort zum Bruch führte. Der vorliegenden Anmeldung liegt damit die Aufgabe zu Grunde, bei einem Schneidwerkzeug mit punktförmiger Klemmung das Schnäbeln zu verhindern.

Diese Aufgabe wird bei einem Klemmhalter der vorgenannten Art dadurch gelöst, daß die Schneidplatte und/oder Ausnehmung des Klemmhalters so ausgestaltet ist, daß die Schneidplatte nur in dem oberen Drittel der Seitenwände der Ausnehmung anliegt.

Die Schneidplatten sind im Normalfall als Wendeschneidplatten ausgeführt, d.h., sie bilden eine planparallele Scheibe, deren Umfang von einem Kreis oder einem Polygon gebildet wird. Die umfangswandungen laufen dabei senkrecht zur Boden- und zur Deckfläche, sieht man von fertigungsbedingten Toleranzen ab.

Eine solche Platte mit senkrechten Umfangswandungen liegt daher nur im oberen Drittel an den Seitenflächen der Ausnehmung an. Der in der Spannmulde wirksame Druck wirkt zwar in Richtung der Seitenwände der Ausnehmung, die Richtung der ausgeübten Kraft geht jetzt jedoch nicht mehr auf eine vollflächige Seitenwand, diese Kraftkomponente kommt vielmehr unterhalb der Anlage der Seitenwand zur Wirkung, d.h. daß das obere Drittel der Seitenwände, an denen die Schneidplatte anliegt, wie ein Drehpunkt wirkt und durch die Spannkraft die Schneidplatte auf den Boden der Ausnehmung fest aufgepreßt wird.

Die unteren zwei Drittel der Seitenwände der Ausnehmung bilden also mit der eingelegten Schneidplatte einen Freiraum, so daß auch leichte Verunreinigungen der Ausnehmung tolerierbar sind.

Eine bevorzugte Ausgestaltung der Erfindung sieht vor, daß die Seitenwände mit einem Absatz versehen sind, wobei dieser Absatz zweckmäßig eine Breite von 1,5 bis 6 mm und eine Tiefe von 0,1 bis 0,3 mm aufweist. Der Absatz läuft damit im oberen Bereich der Seitenwände als Stufe um und ragt in die Ausnehmung um 0,1 bis 0,3 mm hinein, wodurch im Fußbereich der eingelegten Schneidplatte zwischen Schneidplatte und Seitenwand der Ausnehmung ein Freiraum entsteht, der ebenfalls, sieht man von Toleranzen ab, eine Tiefe von 0,1 bis 0, 3 mm aufweist.

Eine weitere Ausgestaltung der Erfindung sieht vor, daß die Schneidplatte als Kegel- oder Pyramidenstumpf ausgeführt ist und der Absatz parallel zur Mantelfläche des Kegelstumpfes bzw. den Seitenflächen des Pyramidenstumpfes verläuft. Diese Ausführungsform wird bei Schneidplatten mit positivem Freiwinkel eingesetzt.

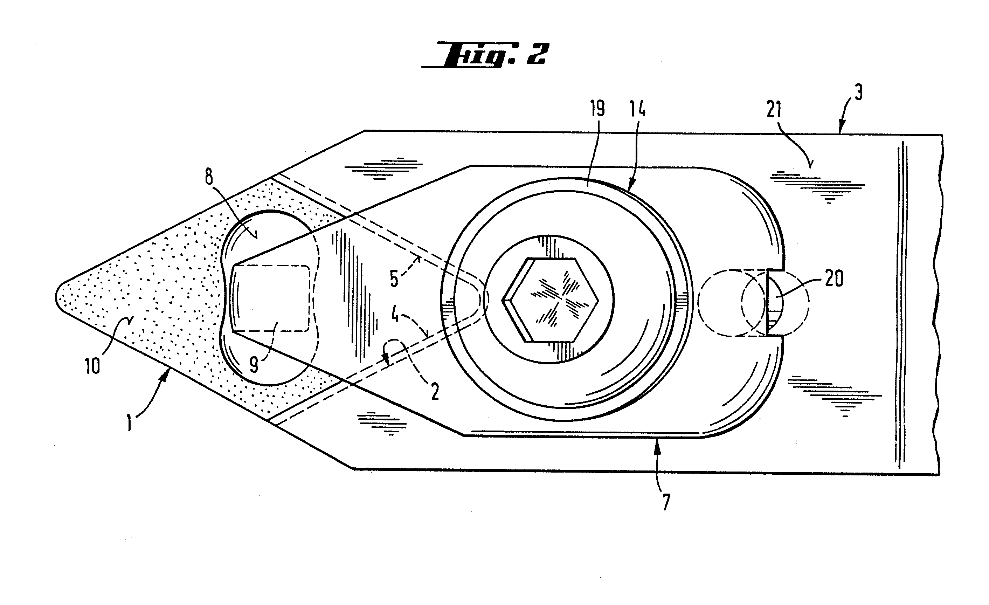

Die Erfindung wird nachstehend an Hand der Figuren 1 bis 4 beschrieben.

- 6 -

0144859

Die Figuren 1 und 3 zeigen einen Ausschnitt aus einem Klemmhalter in der Seitenansicht im Teilschnitt;

Fig. 2 zeigt eine Klemmhalterausführung in der Draufsicht, Fig. 4 den Stand der Technik.

Die Schneidplatte 1 ist als rhombische Wendeschneidplatte ausgeführt und weist auf den beiden Deckflächen (lo) und (11) je eine Spannmulde (8) auf, die allseitig durch Radien begrenzt ist. Die Schneidplatte (1) besteht aus gesinterter Oxidkeramik. Sie enthält als Hauptkomponente Aluminiumoxid.

Der Klemmhalter (3) ist eine Stahlkonstruktion, die im vorderen Bereich eine in der Draufsicht prismatische Ausnehmung (2) aufweist, die von einer rechten Seitenwand (4) und einer linken Seitenwand (5), sowie einer Bodenfläche (13) begrenzt ist. Auf die Bodenfläche (13) ist eine Tragplatte (12) aufgeschraubt, die in der Ausnehmung (2) ruht und als Träger für die Schneidplatte (1) dient.

Eine Klemmschraube (14) greift durch das Langloch (15) in der Spannpratze (7) und verbindet diese mit dem Klemmhalter (3). Die Klemmschraube (14) ist von einer Druckfeder (16) umgeben, die in der Klemmhalteraussenkung (17) und der Spannpratzenaussenkung (18) geführt ist. Die Druckfeder (16) drückt die Spannpratze (7) gegen den Bund (19) der Klemmschraube (14), wodurch der Ansatz (9) der Spannpratze (7) beim Lösen der Klemmschraube (14) aus der Spannmulde (8) der Schneidplatte (1) gehoben wird.

Im Bereich der Schräge (21) des Klemmhalters (3) ist ein Bolzen (2o) angeordnet, der als Führung zwischen den beiden auf der Schräge (21) gleitenden Nocken (22) dient. Beim Lösen der Klemmschraube (14) kann sich daher die Spannpratze (7) nicht verdrehen so lange sich der Bolzen (20) zwischen den Nocken (22) befindet.

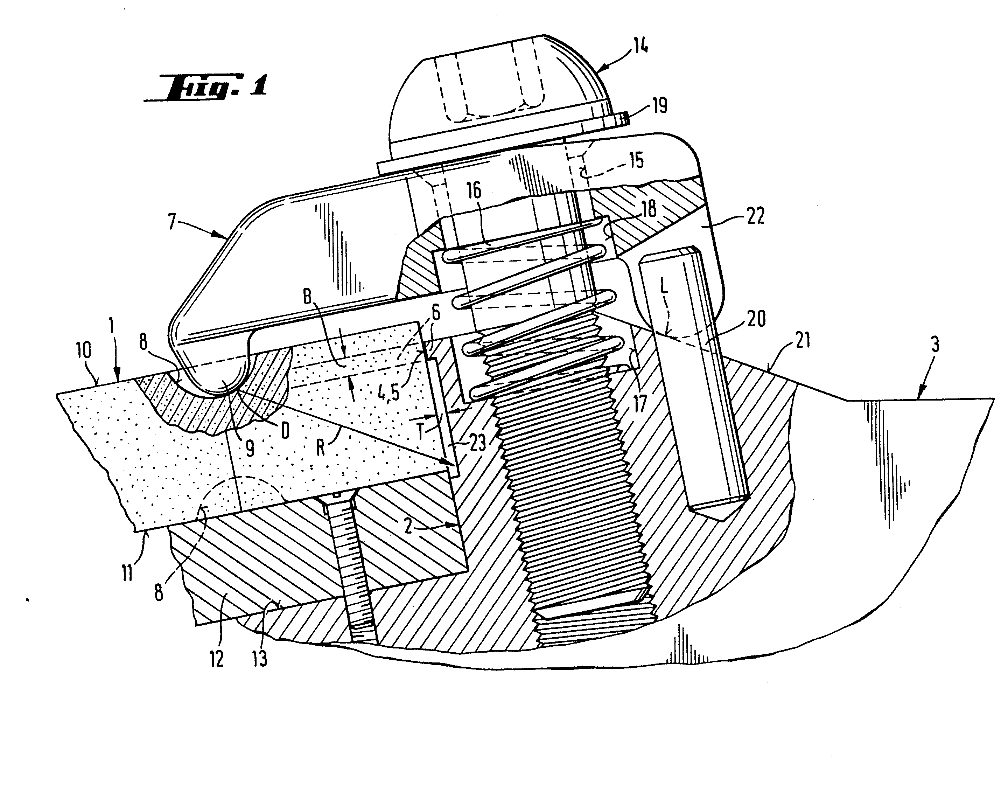

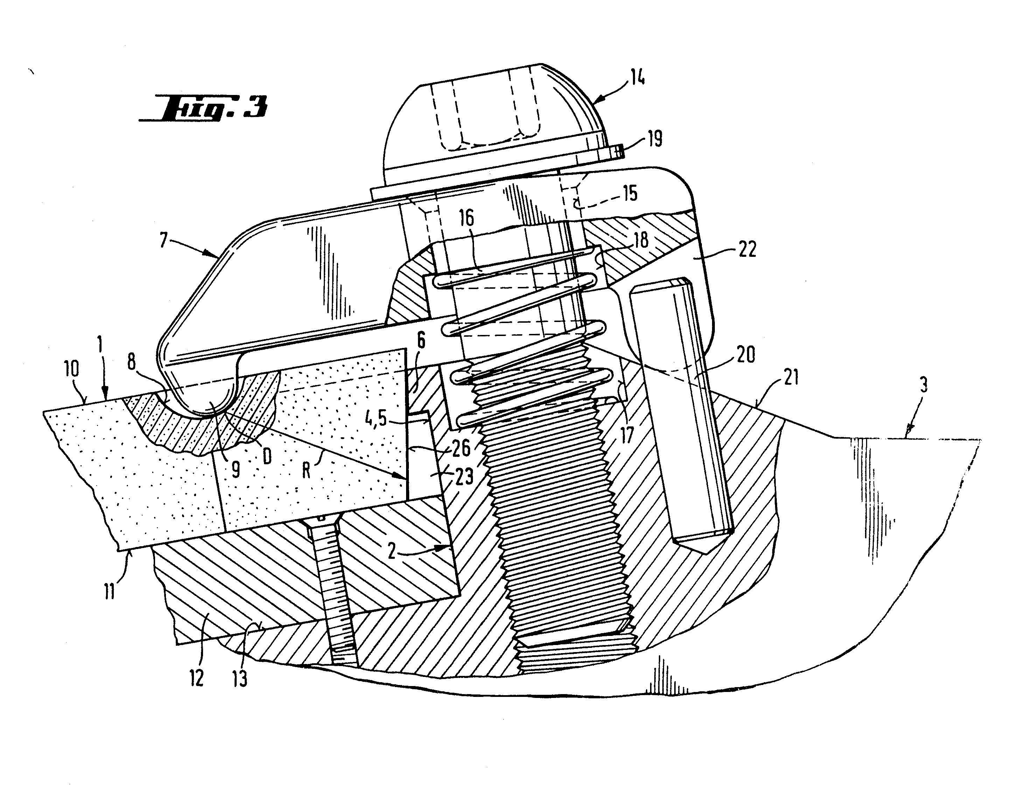

Wie die Fig. 1 + 3 zeigen, befindet sich ein Absatz (6) im oberen Bereich der Seitenwände (4) und (5). Dieser Absatz (6) weist eine Breite B von 2 mm und eine Tiefe T von o,2 mm auf, wobei die Tiefe T in der Fig. 1 vergröbert dargestellt ist, um den durch sie gebildeten Freiraum (23) einfacher darstellbar zu machen.

Wird bei gelöster Spannpratze (7) eine Schneidplatte (1) in den Klemmhalter (3) eingelegt und im Anschluß daran die Klemmschraube (14) angezogen, so bewegt sich die Spannpratze (7) auf den Klemmhalter (1) zu, wobei die Nocken (22) auf der Schräge (21) zur Anlage kommen und eine Berührungslinie L bilden. Durch diese Berührungslinie L ist die Lage der Spannpratze (7) fixiert. Mit ihrem dem Nocken (22) gegenüberliegenden Ende, dem tonnenformigen Ansatz (9), greift sie in die Spannmulde (8) der Schneidplatte (1) ein, was, da diese Spannmulde (8) durch Radien begrenzt ist, zu einer punktförmigen Berührung im Druckpunkt D führt. Durch weiteres Anziehen der Klemmschraube (14) wird eine Spannkraft auf die Schneidplatte (1) aufgebracht, die diese in Richtung der resultierenden R in die Ausnehmung (2) des Klemmhalters (3) einzieht. Die Schneidplatte (1) kommt dabei im oberen Bereich der Seitenwände (4) und (5) am Absatz (6) zur Anlage, während ihr Fußbereich, also der Bereich der auf der Tragplatte (12) aufliegt, keine Berührung mit den Seitenwänden (4) und (5) hat. Der Ansatz (6) in der Ausnehmung (2) des Klemmhalters (3) wirkt praktisch als Drehpunkt, wenn der Druckpunkt D in der Spannmulde (8) der Schneidplatte (1) sehr weit nach oben gewandert ist und sorgt dadurch dafür, daß die Schneidplatte (1) fest auf der Tragplatte (12) aufliegt.

In Fig. 3 ist eine kegelstumpfförmige Schneidplatte dargestellt. Der Kegelstumpffuß bildet dabei mit der umlaufenden Mantelfläche (26) die Schneidkante. Die Mantelfläche (26) liegt an dem parallel zu ihr verlaufenden Absatz (6) an und bildet mit der Wandung der Ausnehmung (2) den Freiraum (23).

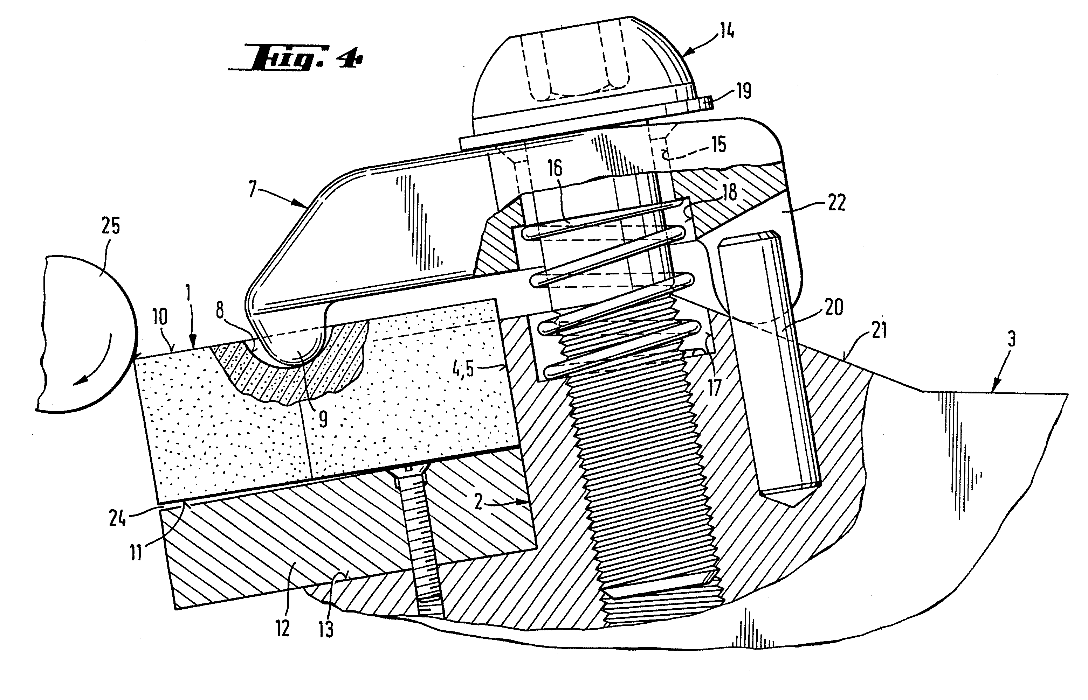

Die Fig. 4 zeigt demgegenüber einen Klemmhalter (3) nach dem Stand der Technik ohne Freiraum (23), wobei auf Grund ungünstiger Ausführungstoleranzen von Schneidplatte (1) und/oder Ausnehmung (2) die Schneidplatte (1) in der Ausnehmung (2) nur an den Seitenwänden (4) und (5) anliegt, so daß sich zwischen der Deckfläche (11) und der Tragplatte (12) ein keilförmiger Spalt (24) bildet. Die Schneidplatte (1) wird beim Anfahren des Klemmhalters (3) an das Werkstück (25) auf Biegung beansprucht, was, da keramische Körper nur eine geringe Biegefestigkeit besitzen, zum Bruch der Schneidplatte (1) führt.

- 9 -

Patentansprüche

1. Klemmhalter für keramische Schneidplatten mit einer Ausnehmung für die Schneidplatte, bei dem eine in ihrer Rotationsmöglichkeit fixierte Spannpratze über eine Nase in eine in der Schneidplatte befindliche Spannmulde eingreift und die Schneidplatte beim Klemmvorgang in die Ausnehmung zieht, so daß sie an den Seitenwänden anliegt und justiert ist, dadurch gekennzeichnet, daß die Schneidplatte (1) und/oder Ausnehmung (2) des Klemmhalters (3) so ausgestaltet ist, daß die Schneidplatte (1) nur in dem oberen Drittel der Seitenwände (4, 5) der Ausnehmung (2) anliegt.

2. Klemmhalter nach Anspruch 1, dadurch gekennzeichnet, daß die Seitenwände (4, 5) mit einem Absatz (6) versehen sind.

3. Klemmhalter nach einem der Ansprüche 1 und 2, dadurch gekennzeichnet, daß der Absatz (6) eine Breite B von 1,5 bis 6 mm und eine Tiefe T von 0,1 bis 0,3 mm aufweist.

4. Klemmhalter nach einem der Ansprüche 1 bis 3, dadurch gekennzeichnet, daß die Schneidplatte (1) als Kegel- oder Pyramidenstumpf ausgeführt ist und der Absatz (6) parallel zur Mantelfläche (26) bzw. den Seitenflächen verläuft.

0144859

**Fig. 1**

0144859

**Fig. 2**

**Fig. 3**

0144859

Fig. 4